# EUROPEAN PATENT APPLICATION

(11) **EP 4 760 721 A1**
(43) Date of publication of application: **17.06.2026**
(21) Application number: 25197439.0
(22) Date of filing: 21.08.2025
(51) Int. Cl.: G11B 27/031, G11B 27/34

(54) **AUDIO FILE GENERATION METHOD, DEVICE, AND MEDIUM**

(30) Priority: 11.12.2024 CN 202411826761
(71) Applicant: Beijing Zitiao Network Technology Co., Ltd., Beijing 100190 (CN)
(72) Inventor: CHEN, Di, Beijing, 100028 (CN); SUN, Dejun, Beijing, 100028 (CN); YANG, Yuhao, Beijing, 100028 (CN); SHOU, Fangbo, Beijing, 100028 (CN); CHAI, Ziqian, Beijing, 100028 (CN)
(74) Representative: Marks & Clerk LLP

(57) **Abstract**

An audio file generation method, a device, and a medium are provided. The method includes: displaying an editing control on a playing page; displaying an audio editing page in response to an interactive operation on the editing control, where the audio editing page includes audio information of a preset audio file and a generation control; determining a reference audio segment in the preset audio file in response to a selection operation on the audio information; and generating a target audio segment according to the reference audio segment and determining a target audio file according to the target audio segment in response to an interactive operation on the generation control. The method can generate a target audio segment with a similar style according to the reference audio segment selected by the user, which can meet the user's music generation expectation, and reduce the difficulty in music creation and improving user experience.

## Description

This application claims priority to Chinese Patent Application No. 202411826761.2, filed on December 11, 2024, the entire disclosure of which is incorporated herein by reference as part of the present disclosure.

### TECHNICAL FIELD

Embodiments of the present disclosure relate to computer technologies, and in particular, to an audio file generation method, a device, and a medium.

### BACKGROUND

Computer technologies have been widely used in music processing, and more and more users may create music through music clients. At present, users may generate music by inputting text into a music client. However, such a music generation method requires users to input text to prompt a model to generate music. If the text is unclearly expressed or the music generation expectation cannot be accurately described in words, the generated music may deviate from the user expectation, resulting in poor user experience.

### SUMMARY

Embodiments of the present disclosure provide an audio file generation method, comprising: displaying an editing control on a playing page, wherein the playing page is configured to play a preset audio file; displaying an audio editing page in response to an interactive operation on the editing control, wherein the audio editing page comprises audio information of the preset audio file and a generation control; determining a reference audio segment in the preset audio file in response to a selection operation on the audio information; and generating a target audio segment according to the reference audio segment and determining a target audio file according to the target audio segment in response to an interactive operation on the generation control.

In at least an embodiment, determining the reference audio segment in the preset audio file in response to the selection operation on the audio information comprises: determining the reference audio segment in the preset audio file according to an audio position corresponding to a dragging operation on the audio information in response to the dragging operation on the audio information; and loop-playing the reference audio segment and converting audio information corresponding to the reference audio segment into a selected state.

In at least an embodiment, the audio information is divided into at least two audio information segments based on lyrics of the preset audio file, and determining the reference audio segment in the preset audio file according to the audio position corresponding to the dragging operation on the audio information in response to the dragging operation on the audio information comprises: determining the reference audio segment in the preset audio file according to a selected audio information segment in response to a selection operation on an audio information segment.

In at least an embodiment, displaying the editing control on the playing page comprises: displaying a music cover corresponding to the preset audio file on the playing page and displaying the editing control at a corresponding position of the music cover.

In at least an embodiment, the audio information comprises an audio bar, and displaying the audio editing page in response to the interactive operation on the editing control comprises: displaying the audio editing page in response to a click operation on the editing control, wherein the audio editing page further comprises a lyrics panel and a text control, the lyrics panel is configured to display lyrics of the preset audio file, and the audio bar is located between the lyrics panel and the text control.

In at least an embodiment, the method further comprises: in response to a text input operation on the text control, hiding the lyrics panel in the audio editing page, adjusting positions of the audio bar and the text control, and determining a target text according to the text input operation, wherein the target text comprises lyrics of the target audio segment and/or a lyrics description of the target audio segment; and generating the target audio segment according to the reference audio segment in response to the interactive operation on the generation control comprises: generating the target audio segment according to the reference audio segment and the target text in response to the interactive operation on the generation control.

In at least an embodiment, generating the target audio segment according to the reference audio segment and the target text comprises: in response to the target text comprising a lyrics description of the target audio segment, generating target lyrics of the target audio segment according to the lyrics description; and generating the target audio segment according to the target lyrics and at least one music attribute of the reference audio segment selected from the group consisting of timbre, music style, and arrangement.

In at least an embodiment, the audio editing page further comprises a time option; the method further comprises: determining target time in response to a selection operation on the time option; and generating the target audio segment according to the reference audio segment in response to the interactive operation on the generation control comprises: generating the target audio segment according to the reference audio segment and the target time in response to the interactive operation on the generation control.

In at least an embodiment, determining the target audio file according to the target audio segment comprises: connecting the reference audio segment and the target audio segment to obtain the target audio file, and playing the target audio file.

Embodiments of the present disclosure further provide an electronic device, comprising: one or more processors; and a storage apparatus, configured to store one or more programs, and the one or more programs, when executed by the one or more processors, cause the one or more processors to implement the audio file generation method provided by any one of the above embodiments.

Embodiments of the present disclosure further provide a non-transitory storage medium comprising computer-executable instructions, wherein the computer-executable instructions, when executed by a computer processor, are configured to perform the audio file generation method provided by any one of the above embodiments.

### BRIEF DESCRIPTION OF DRAWINGS

The above and other features, advantages, and aspects of embodiments of the present disclosure will become more apparent in combination with the drawings and with reference to the following specific implementations. Throughout the drawings, the same or similar reference numerals denote the same or similar elements. It should be understood that the drawings are schematic and that parts and elements are not necessarily drawn to scale.
Fig. 1 is a schematic flowchart of an audio file generation method according to an embodiment of the present disclosure;
Fig. 2 is a schematic diagram of a playing page according to an embodiment of the present disclosure;
Fig. 3 is a schematic diagram of an audio editing page according to an embodiment of the present disclosure;
Fig. 4 is a schematic diagram of another audio editing page according to an embodiment of the present disclosure;
Fig. 5 is a schematic diagram of still another audio editing page according to an embodiment of the present disclosure;
Fig. 6 is a schematic flowchart of another audio file generation method according to an embodiment of the present disclosure;
Fig. 7 is a schematic diagram of still another audio editing page according to an embodiment of the present disclosure;
Fig. 8 is a schematic diagram of a structure of an audio file generation apparatus according to an embodiment of the present disclosure; and
Fig. 9 is a schematic diagram of a structure of an electronic device according to an embodiment of the present disclosure.

### DETAILED DESCRIPTION

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that steps described in method implementations of the present disclosure may be performed in different orders, and/or performed in parallel. In addition, the method implementations may include additional steps and/or omit performing illustrated steps. The scope of the present disclosure is not limited in this regard.

As used herein, the term "include/comprise" and variations thereof are open-ended inclusions, that is, "include/comprise but not limited to". The term "based on" is "at least partially based on". The term "one embodiment" means "at least one embodiment". The term "another embodiment" means "at least one another embodiment". The term "some embodiments" means "at least some embodiments". Relevant definitions of other terms will be given in the following description.

It should be noted that concepts such as "first" and "second" mentioned in the present disclosure are only used to distinguish different apparatuses, modules, or units, and are not used to limit the order of functions performed by these apparatuses, modules, or units or interdependence therebetween.

It should be noted that modifications of "one" and "multiple" mentioned in the present disclosure are illustrative rather than restrictive, and those skilled in the art should understand that "one" or "multiple" should be understood as "one or multiple", unless clearly indicated in the context otherwise.

The names of messages or information exchanged between multiple apparatuses in the implementations of the present disclosure are only used for illustrative purposes, and are not used to limit the scope of these messages or information.

It may be understood that before using the technical solutions disclosed in the embodiments of the present disclosure, a user should be informed of the type, range of use, use scenarios, etc. of personal information involved in the present disclosure and the authorization of the user should be obtained in an appropriate manner according to relevant laws and regulations.

For example, in response to receiving an active request from a user, prompt information is sent to the user to clearly inform the user that the requested operation will require access to and use of the user's personal information. In this way, the user may independently choose, according to the prompt information, whether to provide the personal information to software or hardware, such as an electronic device, an application, a server, or a storage medium, that performs operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to select "agree" or "disagree" to provide the personal information to the electronic device.

It may be understood that the above process of notifying and obtaining user authorization is only illustrative, and does not constitute a limitation on the implementations of the present disclosure. Other manners that satisfy relevant laws and regulations may also be applied to the implementations of the present disclosure.

It may be understood that the data involved in the technical solution (including but not limited to the data itself, acquisition or use of the data) should comply with requirements of corresponding laws, regulations, and related provisions.

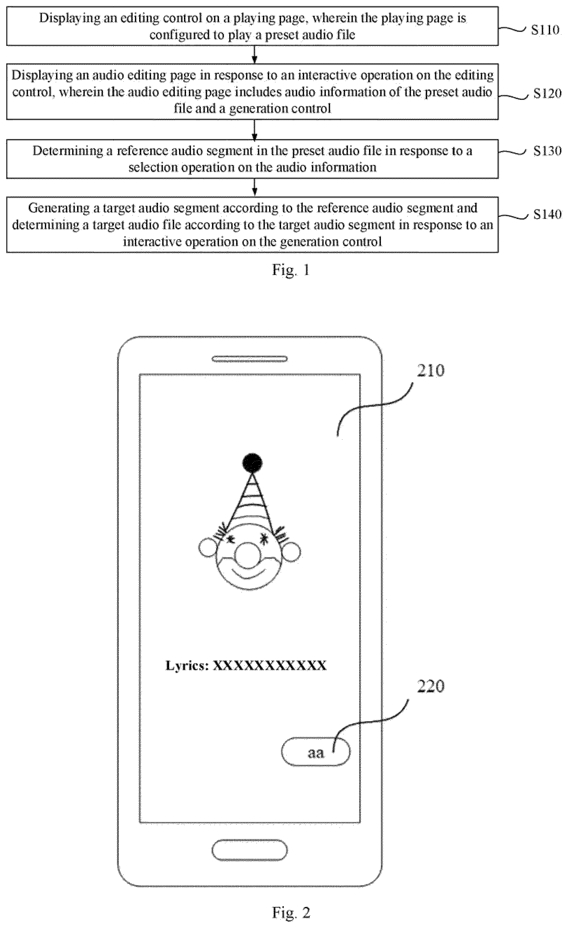

Fig. 1 is a schematic flowchart of an audio file generation method according to an embodiment of the present disclosure. The embodiment of the present disclosure is applicable to a scenario of music creation. The method may be performed by an audio file generation apparatus, which may be implemented in the form of software and/or hardware. Optionally, the method is implemented by an electronic device, which may be a mobile terminal, a PC, a server, or the like.

As shown in Fig. 1, the method includes:
S110, displaying an editing control on a playing page, where the playing page is configured to play a preset audio file.

The preset audio file includes a historically generated audio file. For example, a user may create his/her own music work through a music client, and may also upload the music work to a server or share the music work. For example, the preset audio file includes a music work created and uploaded by the user through the music client.

The playing page includes a music cover, lyrics, an author, an editing control, etc. corresponding to a currently played preset audio file. The editing control is configured to trigger a music generation event for generating music in a similar style. The music generation event is used to generate a new audio segment according to a selected audio segment. In response to the editing control being clicked, the music generation event for generating music in a similar style is triggered. In response to the music generation event being triggered, a music editing page is displayed. Exemplarily, the music cover corresponding to the preset audio file is displayed on the playing page, and the editing control is displayed at a corresponding position of the music cover. For example, the editing control may be displayed at the bottom of the music cover. By displaying the editing control at the corresponding position of the music cover, an entry for a similar music generation service may be intuitively displayed, which facilitates triggering of the music generation event for the currently played audio file during a music listening process. There is no need to search for and select an audio file from a playlist and then trigger a similar music generation event for the selected audio file, which simplifies user operations.

Fig. 2 is a schematic diagram of a playing page according to an embodiment of the present disclosure. As shown in Fig. 2, a music cover is displayed on a playing page 210 of a music client, lyrics and the like are displayed at a corresponding position of the music cover, the lyrics are scrolled synchronously according to music playing time, and an editing control 220 is displayed at the bottom of the music cover.

S120, displaying an audio editing page in response to an interactive operation on the editing control, where the audio editing page includes audio information of the preset audio file and a generation control.

In the embodiment of the present disclosure, the audio editing page represents an audio segment selection page. The audio editing page may include audio information and a generation control. The audio information may represent audio duration of the preset audio file. For example, the audio information includes an audio bar, a progress bar, a timestamp of lyrics or the like. The audio bar may include an audio waveform or the like. The audio waveform may represent a changing relationship between volume of the preset audio file and time.

In the embodiment of the present disclosure, the interactive operation is an operation such as a click operation, a voice command, a visual gaze, or a gesture on the editing control.

Exemplarily, the audio editing page is displayed in response to the click operation on the editing control, the audio editing page further includes a lyrics panel and a text control, the lyrics panel is configured to display lyrics of the preset audio file, and the audio bar is located between the lyrics panel and the text control. According to the embodiment of the present disclosure, the lyrics of the preset audio file may be intuitively displayed, which facilitates discovery of creation inspiration by a user from the lyrics of the preset audio file. In addition, the text control is displayed on the audio editing page, and a prompt of the music generation model is determined according to an input target text through a text input operation on the text control, so that a target audio segment generated by the music generation model is more in line with user expectations.

Optionally, a corresponding sub-segment in the audio bar is converted into a playing state according to a playing time of the preset audio file. The lyrics panel is displayed above the audio bar. The lyrics of the preset audio file are scrolled and displayed in the lyrics panel, and corresponding lyrics are converted into a selected state according to the playing time of the preset audio file. Optionally, if the audio bar is an audio waveform, the sub-segment of the audio bar may include an audio waveform segment. For example, an audio waveform segment corresponding to an audio segment being played is adjusted to a target color according to the playing time of the preset audio file; or, the audio waveform segment corresponding to the audio segment being played is bold. In addition, a display effect of the lyrics corresponding to the audio segment in the playing state is adjusted. Optionally, text processing such as bolding may be performed on the lyrics corresponding to the audio segment in the playing state.

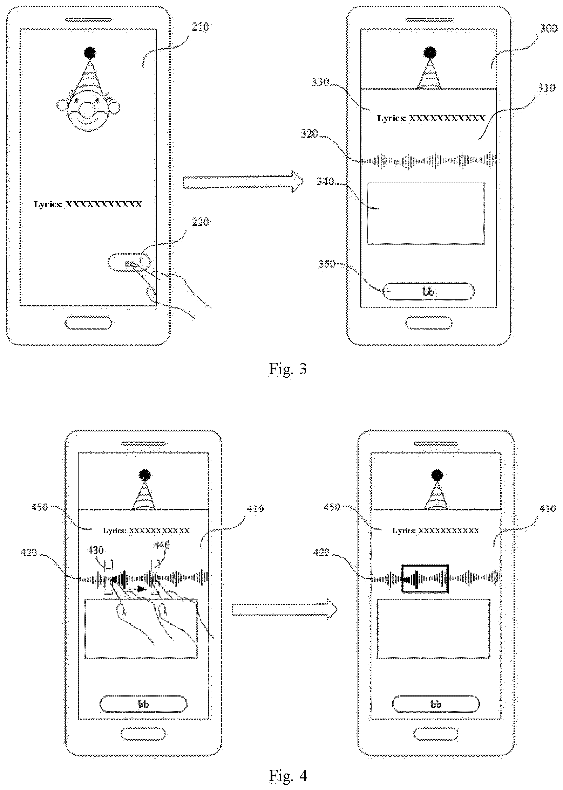

Fig. 3 is a schematic diagram of an audio editing page according to an embodiment of the present disclosure. As shown in Fig. 3, an audio editing page 310 is displayed on an upper layer of a playing page 300. Optionally, the audio editing page 310 may be a floating window. The audio editing page 310 includes an audio bar 320, a lyrics panel 330, a text control 340, a generation control 350, and the like. The lyrics in the lyrics panel 330 correspond to a sub-segment of the audio bar 320.

The generation control is configured to trigger the music generation event. In response to the music generation event being detected, a reference audio segment is input into a pre-trained generation model, so that a target audio segment with a similar music style is generated by the generation model based on the reference audio segment. The pre-trained generation model may include a music generation model that generates a new audio segment similar to an input audio segment by identifying music features, such as timbre, music style, and arrangement, of the input audio segment. Optionally, a diffusion model may be supervised and fine-tuned to obtain the music generation model.

S130, determining a reference audio segment in the preset audio file in response to a selection operation on the audio information.

The reference audio segment represents an audio segment selected from the preset audio file. The reference audio segment may be used as a prompt and input into the music generation model, so that the target audio segment is generated by the music generation model.

Exemplarily, a reference audio segment in the preset audio file is determined according to an audio position corresponding to a dragging operation in response to the dragging operation on the audio information. The reference audio segment is loop-played, and audio information corresponding to the reference audio segment is converted into a selected state. In the embodiment of the present disclosure, the reference audio segment may be selected through the dragging operation on the audio information, which implements an intuitive display of an audio segment selection manner, enriches interaction forms, and simplifies audio segment selection steps.

Optionally, time prompt information may also be displayed at a corresponding position of the audio information according to a duration requirement of an input audio segment of the music generation model, so as to prompt a user of a duration range of the selected reference audio segment. The duration of the reference audio segment between the audio positions corresponding to the dragging operation needs to be within the above duration range. If the duration of the reference audio segment between the audio positions corresponding to the dragging operation exceeds an upper limit of the above duration range, an audio segment that satisfies the duration range is intercepted from the reference audio segment and used as the reference audio segment. If the duration of the reference audio segment between the audio positions corresponding to the dragging operation is less than a lower limit of the duration range, the reference audio segment corresponding to a current dragging operation is ignored, and prompt information of insufficient duration is displayed. For example, the duration range is greater than or equal to t1 and less than or equal to t2. If the duration of the reference audio segment is t2+a seconds, t2 seconds of audio data of the reference audio segment may be intercepted backward from a start position of the reference audio segment and used as a final reference audio segment. Optionally, t2 seconds of audio data of the reference audio segment may also be intercepted forward from an end position of the reference audio segment and used as the final reference audio segment.

The audio position includes an audio time at a start of the dragging operation and an audio time at an end of the dragging operation. For example, if the duration of the preset audio file is 90 seconds and the dragging operation is from the 30th second to the 60th second, 30 seconds and 60 seconds are used as a start time and an end time of the reference audio segment, and a corresponding audio segment is intercepted from the preset audio file according to the start time and the end time. Optionally, audio information corresponding to the reference audio segment is framed by a rectangular box to represent that the audio information corresponding to the reference audio segment is converted into the selected state. And/or, bolding may also be performed on the rectangular box. And/or, shading may also be added to the audio information in the rectangular box. And/or, the color of the rectangular box may also be adjusted. And/or, the color of the shading may also be adjusted, etc.

Fig. 4 is a schematic diagram of another audio editing page according to an embodiment of the present disclosure. As shown in Fig. 4, audio information of a preset audio file included in an audio editing page 410 is an audio bar 420. The audio bar 420 is dragged from a first audio position 430 to a second audio position 440, and a sub-segment of the audio bar 420 between the first audio position 430 and the second audio position 440 is selected by a rectangular box, to implement conversion of the selected sub-segment into a selected state. Lyrics corresponding to the selected sub-segment are loop-played in a lyrics panel 450. A region marked in bold in the audio bar 420 represents an audio being played. In other embodiments, an audio waveform segment corresponding to an audio being played nay be adjusted to a target color (e.g. red).

Optionally, if the audio information of the preset audio file includes a progress bar, the total duration and the played duration of the preset audio file are represented by the progress bar. The reference audio segment in the preset audio file is selected by dragging the progress bar.

Optionally, the preset audio file is divided into at least two audio segments according to lyrics of the preset audio file, and the audio information of the preset audio file includes start time and end time of each audio segment. The reference audio segment in the preset audio file is determined in response to an input audio start time and an input audio end time.

Optionally, if the audio information of the preset audio file includes the total audio duration and the played duration, the reference audio segment in the preset audio file is determined in response to an input audio segment duration according to the played duration of the preset audio file and the audio segment duration. If the total audio duration of the preset audio file is 120 seconds, the played duration is s seconds, the audio segment duration is n seconds, and s+n seconds is less than or equal to 120 seconds, an audio segment with a length of n seconds is intercepted from the (s+1)th second of the preset audio file and used as the reference audio segment. If s+n exceeds 120 seconds, prompt information of audio selection error is displayed.

S140, generating a target audio segment according to the reference audio segment and determining a target audio file according to the target audio segment in response to an interactive operation on the generation control.

In the embodiment of the present disclosure, after the reference audio segment is selected, in response to the click operation on the generation control being detected, the reference audio segment is input into the music generation model. The music generation model learns at least one music attribute of the reference audio segment selected from the group consisting of timbre, music style, arrangement, and lyrics, and generates the target audio segment with a similar music style to the reference audio segment. The reference audio segment and the target audio segment are connected to obtain the target audio file, and the target audio file is played. In order to ensure natural connection between the audio segments, cross fading may be performed on the reference audio segment and the target audio segment. The target audio file is played to verify whether the generated audio satisfies expectations.

Optionally, the lyrics panel in the audio editing page is hidden, and positions of the audio bar and the text control are adjusted in response to a text input operation on the text control, and a target text is determined according to the text input operation, where the target text includes lyrics of the target audio segment and/or a lyrics description of the target audio segment.

The lyrics description of the target audio segment is used to describe the lyrics of the target audio segment. For example, the lyrics description of the target audio segment includes at least one selected from the group consisting of description information of a lyrics structure, description information of lyrics content, and description information of a lyrics style. Optionally, the lyrics description may include lyrics expressing a seaside walk, a verse and two choruses, or the like. Optionally, the number of sentences included in the verse may also be limited, and the number of sentences included in the chorus may also be limited, etc.

For example, in response to a click operation on the text control, the lyrics panel in the audio editing page is hidden, and the audio bar and the text control are moved to the top of the audio editing page, so as to display a keyboard at the bottom of the audio editing page and input a text content to a corresponding position of the text control through the keyboard.

Generating the target audio segment according to the reference audio segment in response to the interactive operation on the generation control comprises: generating the target audio segment according to the reference audio segment and the target text in response to the interactive operation on the generation control.

If the target text includes the lyrics description of the target audio segment, target lyrics of the target audio segment are generated according to the lyrics description. The target audio segment is generated according to the target lyrics and at least one music attribute selected from the group consisting of timbre, music style, and arrangement of the reference audio segment.

For example, after the reference audio segment is selected and the lyrics are input into the corresponding position of the text control, in response to the click operation on the generation control being detected, the reference audio segment and the lyrics are input into the music generation model, and the target audio segment is generated by the music generation model based on the input lyrics and at least one music attribute selected from the group consisting of timbre, music style, and arrangement of the reference audio segment.

Optionally, after the reference audio segment is selected and the lyrics description is input into the corresponding position of the text control, in response to the click operation on the generation control being detected, the reference audio segment and the lyrics description are input into the music generation model, and the target lyrics of the target audio segment are generated by the music generation model based on the lyrics description. Then, the target audio segment is generated by the audio generation model based on the target lyrics and at least one music attribute selected from the group consisting of timbre, music style, and arrangement of the reference audio segment.

According to the embodiment of the present disclosure, music may be composed according to the lyrics written by a user without the need for the user to have the ability to compose music, which reduces the difficulty in music creation. The lyrics description may also be input into the music generation model so that the lyrics are generated by the model, which reduces the difficulty in lyrics creation.

Optionally, if no target text is input and the click operation on the generation control is detected, the reference audio segment is input into the music generation model, and a model audio segment is generated by the music generation model based on lyrics of the reference audio segment and at least one selected from the group consisting of timbre, music style, and arrangement of the reference audio segment.

Optionally, the audio editing page further includes a time option. A target time is determined in response to a selection operation on the time option. Generating the target audio segment according to the reference audio segment in response to the interactive operation on the generation control comprises:
generating the target audio segment according to the reference audio segment and the target text in response to the interactive operation on the generation control. By selecting the target time, the audio duration of the target audio segment generated by the music generation model may be constrained.

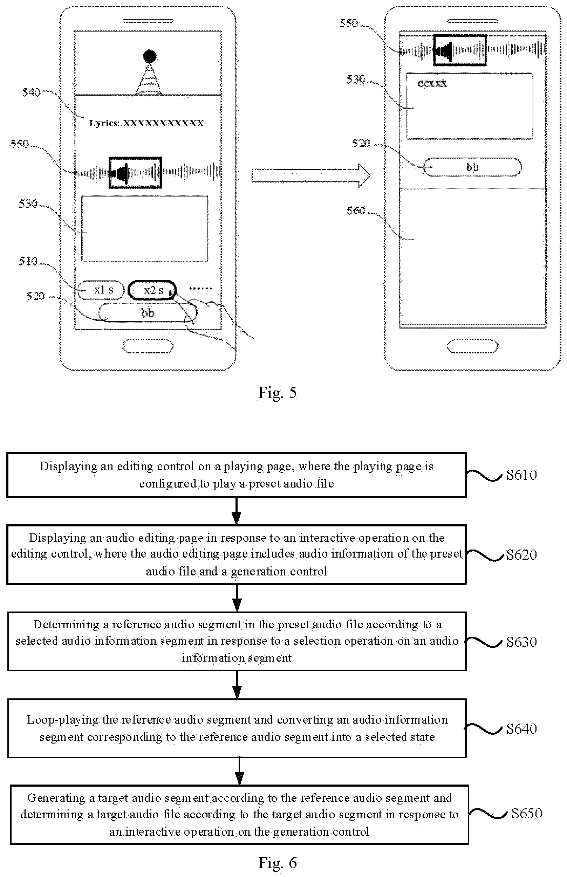

Fig. 5 is a schematic diagram of another audio editing page according to an embodiment of the present disclosure. As shown in Fig. 5, the audio editing page further includes a time option 510. The time option 510 is located between a generation control 520 and a text control 530. A selected time option 510 is determined as the target time in response to a selection operation on the time option 510. The text control 530 is clicked, a lyrics panel 540 and the time option 510 in the audio editing page are hidden, and positions of an audio bar 550, the text control 530, and the generation control 520 are controlled to move vertically upward along the audio editing page. A keyboard 560 is displayed at the bottom of the audio editing page.

Optionally, after the lyrics of the target audio segment are input into the text control and the target time is selected, the reference audio segment, the lyrics of the target audio segment, and the target time are input into the music generation model, and the target audio segment is generated by the music generation model based on the reference audio segment, the lyrics of the target audio segment, and the target time. The target time is used to constrain duration of the target audio segment generated by the music generation model.

Optionally, if the duration corresponding to the lyrics of the target audio segment is less than the target time, the target audio segment includes at least two paragraphs of lyrics, and the target audio segment corresponding to the target time is obtained through lyrics looping.

In the technical solution of the embodiment of the present disclosure, the editing control is displayed on the playing page, the playing page is configured to play the preset audio file, the audio editing page is displayed in response to the interactive operation on the editing control, and the audio editing page includes the audio information of the preset audio file and the generation control. The reference audio segment in the preset audio file is determined in response to the selection operation on the audio information, the target audio segment is generated according to the reference audio segment in response to the interactive operation on the generation control, the target audio file is determined according to the target audio segment, and the target audio file is played. In the technical solution of the embodiment of the present disclosure, the reference audio segment is selected in the currently played preset audio file, and the target audio segment with a similar style is generated based on the reference audio segment. Since audio contains richer knowledge than text, the target audio segment generated according to the reference audio segment selected by the user may meet the user's music generation expectation, reducing the difficulty in music creation and improving user experience.

Fig. 6 is a schematic flowchart of another audio file generation method according to an embodiment of the present disclosure. On the basis of the above embodiments, the embodiment of the present disclosure further defines an implementation in which the audio information is divided into at least two audio information segments based on lyrics of the preset audio file, and the reference audio segment in the preset audio file is determined according to an audio position corresponding to a dragging operation on the audio information in response to the dragging operation on the audio information.

As shown in Fig. 6, the method includes:
S610, displaying an editing control on a playing page, where the playing page is configured to play a preset audio file.

S620, displaying an audio editing page in response to an interactive operation on the editing control, where the audio editing page includes audio information of the preset audio file and a generation control.

S630, determining a reference audio segment in the preset audio file according to a selected audio information segment in response to a selection operation on an audio information segment.

In the embodiment of the present disclosure, the audio information is divided into at least two audio information segments according to a lyrics structure of the preset audio file. The at least two audio information segments are displayed on the audio editing page. The audio information segment may be represented as a rectangular box, and an audio waveform of a corresponding audio segment is displayed in the rectangular box. The reference audio segment is determined according to the selected audio information segment through the selection operation on at least one audio information segment.

In the embodiment of the present disclosure, the selected audio information segment is a continuous audio information segment in the at least two audio information segments, to ensure content continuity of the generated target audio segment.

S640, loop-playing the reference audio segment and converting an audio information segment corresponding to the reference audio segment into a selected state.

Exemplarily, after the reference audio segment is selected, the reference audio segment is loop-played to wait for the user to input the target text or the target time. An attribute of the rectangular box corresponding to the audio information segment corresponding to the reference audio segment is adjusted to represent that the audio information segment is selected.

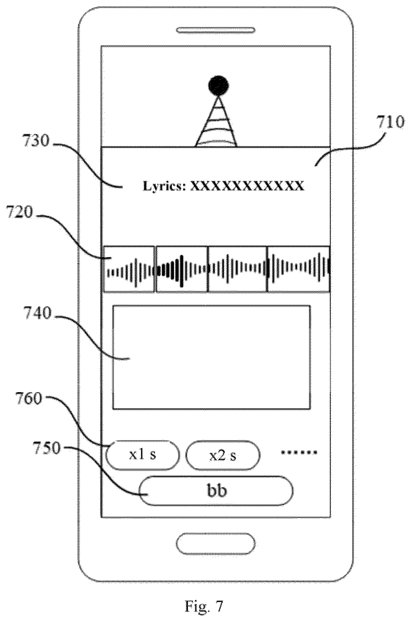

Fig. 7 is a schematic diagram of another audio editing page according to an embodiment of the present disclosure. As shown in Fig. 7, an audio editing page 710 includes at least two audio waveform segments 720. The audio waveform segments 720 corresponds to lyrics paragraphs. The audio waveform segment 720 is displayed between a lyrics panel 730 and a text control 740. A generation control 750 is displayed at the bottom of the audio editing page 710. A time option 760 is further displayed between the text control 740 and the generation control 750. In response to a selection operation on the audio waveform segment 720, a rectangular box corresponding to a selected audio waveform segment 720 is bolded to represent that the audio waveform segment 720 is selected.

S650, generating a target audio segment according to the reference audio segment and determining a target audio file according to the target audio segment in response to an interactive operation on the generation control.

In the technical solution of the embodiment of the present disclosure, the audio information is divided into at least two audio information segments according to the lyrics structure of the preset audio file, the reference audio segment is determined through the selection operation on the audio information segment, and the target audio segment is generated according to the reference audio segment. Since the selected audio information segment is a continuous audio information segment, the continuity of the generated target audio segment may be ensured, and the audio generation quality may be improved.

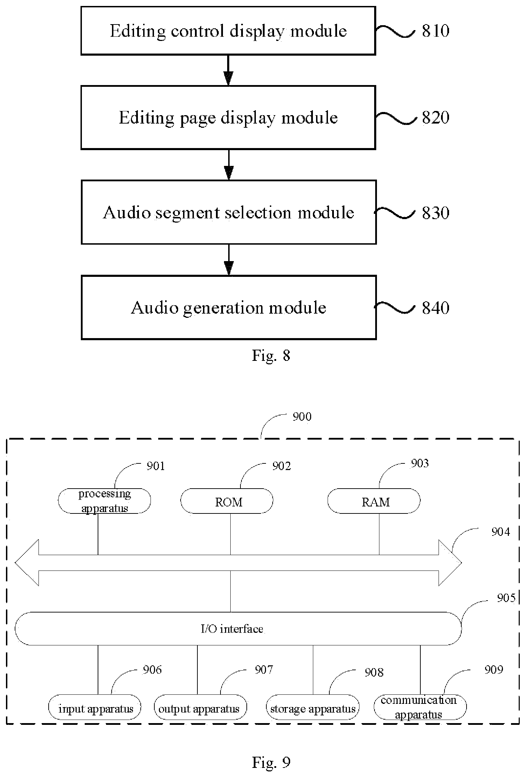

Fig. 8 is a schematic diagram of a structure of an audio file generation apparatus according to an embodiment of the present disclosure. The apparatus may be implemented in the form of software and/or hardware, and optionally, by an electronic device, where the electronic device may be a mobile terminal, a PC, a server, or the like. As shown in Fig. 8, the apparatus includes: an editing control display module 810, an editing page display module 820, an audio segment selection module 830, and an audio generation module 840.

The editing control display module 810 is configured to display an editing control on a playing page, where the playing page is configured to play a preset audio file.

The editing page display module 820 is configured to display an audio editing page in response to an interactive operation on the editing control, where the audio editing page includes audio information of the preset audio file and a generation control.

The audio segment selection module 830 is configured to determine a reference audio segment in the preset audio file in response to a selection operation on the audio information.

The audio generation module 840 is configured to generate a target audio segment according to the reference audio segment and determine a target audio file according to the target audio segment in response to an interactive operation on the generation control.

Optionally, the audio segment selection module 830 is specifically configured to: determine the reference audio segment in the preset audio file according to an audio position corresponding to a dragging operation on the audio information in response to the dragging operation on the audio information; and loop-play the reference audio segment and convert audio information corresponding to the reference audio segment into a selected state.

Further, if the audio information is divided into at least two audio information segments based on the lyrics of the preset audio file, the determining a reference audio segment in the preset audio file according to an audio position corresponding to a dragging operation in response to the dragging operation for the audio information includes: determining the reference audio segment in the preset audio file according to a selected audio information segment in response to a selection operation for the audio information segments.

Optionally, the editing control display module 810 is specifically configured to: display a music cover corresponding to the preset audio file on the playing page and display the editing control at a corresponding position of the music cover.

Optionally, the audio information includes an audio bar, and the editing page display module 820 is specifically configured to: display the audio editing page in response to a click operation on the editing control, where the audio editing page further includes a lyrics panel and a text control, the lyrics panel is configured to display lyrics of the preset audio file, and the audio bar is located between the lyrics panel and the text control.

Optionally, the method further includes: hiding the lyrics panel in the audio editing page and adjusting positions of the audio bar and the text control in response to a text input operation on the text control, and determining target text according to the text input operation, where the target text includes lyrics of the target audio segment and/or a lyrics description of the target audio segment.

The audio generation module 840 is specifically configured to: generate the target audio segment according to the reference audio segment and the target text in response to the interactive operation on the generation control.

Further, generating the target audio segment according to the reference audio segment and the target text comprises: in response to the target text comprising a lyrics description of the target audio segment, generating target lyrics of the target audio segment according to the lyrics description; and generating the target audio segment according to the target lyrics and at least one music attribute of the reference audio segment selected from the group consisting of timbre, music style, and arrangement.

Optionally, the audio editing page further includes a time option; the apparatus further includes a time determination module, configured to determine target time in response to a selection operation on the time option; and the audio generation module 840 is further configured to: generate the target audio segment according to the reference audio segment and the target time in response to the interactive operation on the generation control.

Optionally, the audio generation module 840 is further configured to: connect the reference audio segment and the target audio segment to obtain the target audio file and play the target audio file.

The audio file generation apparatus provided by the embodiment of the present disclosure may perform the audio file generation method provided by any embodiment of the present disclosure, and has corresponding functional modules and beneficial effects for performing the method.

It is worth noting that the units and modules included in the above apparatus are only divided according to functional logic, but are not limited to the above division, as long as the corresponding functions may be implemented. In addition, the specific names of the functional units are only for the convenience of distinguishing from each other, and are not used to limit the protection scope of the embodiments of the present disclosure.

Fig. 9 is a schematic diagram of a structure of an electronic device according to an embodiment of the present disclosure. Reference is made to Fig. 9 below, which illustrates a schematic diagram of a structure of an electronic device (such as a terminal device or a server in Fig. 9) 900 suitable for implementing an embodiment of the present disclosure. The terminal device in the embodiment of the present disclosure may include, but is not limited to, a mobile terminal such as a mobile phone, a notebook computer, a digital broadcast receiver, a personal digital assistant (PDA), a tablet computer, a portable media player (PMP), and an in-vehicle terminal (such as an in-vehicle navigation terminal), and a stationary terminal such as a digital TV and a desktop computer. The electronic device shown in Fig. 9 is only an example, and should not impose any limitation on the functions and the range of use of the embodiments of the present disclosure.

As shown in Fig. 9, the electronic device 900 may include a processing apparatus (such as a central processing unit and a graphics processor) 901, which may perform various appropriate actions and processing according to a program stored in a read-only memory (ROM) 902 or a program loaded from a storage apparatus 908 into a random access memory (RAM) 903. The RAM 903 further stores various programs and data required for operations of the electronic device 900. The processing apparatus 901, the ROM 902, and the RAM 903 are connected to each other through a bus 904. An editing/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk; and a communication apparatus 909. The communication apparatus 909 may allow the electronic device 900 to perform wireless or wired communication with other devices to exchange data. Although Fig. 9 shows the electronic device 900 having various apparatuses, it should be understood that it is not required to implement or provide all of the illustrated apparatuses. More or fewer apparatuses may be implemented or provided alternatively.

In particular, according to the embodiment of the present disclosure, the process described above with reference to the flowchart may be implemented as a computer software program. For example, the embodiment of the present disclosure includes a computer program product, which includes a computer program carried on a non-transitory computer-readable medium, where the computer program includes program code for performing the method shown in the flowchart. In such an embodiment, the computer program may be downloaded from a network and installed through the communication apparatus 909, or installed from the storage apparatus 908, or installed from the ROM 902. When the computer program is executed by the processing apparatus 901, the above-mentioned functions defined in the method of the embodiment of the present disclosure are executed.

The names of messages or information exchanged between multiple apparatuses in the implementations of the present disclosure are only used for illustrative purposes, and are not used to limit the scope of these messages or information.

The electronic device provided by the embodiment of the present disclosure belongs to the same inventive concept as the audio file generation method provided by the above-mentioned embodiment. For technical details not described in detail in this embodiment, reference may be made to the above-mentioned embodiment, and this embodiment has the same beneficial effects as the above-mentioned embodiment.

An embodiment of the present disclosure provides a non-transitory computer-readable storage medium having a computer program stored thereon, where the audio file generation method provided by the above-mentioned embodiment is implemented when the program is executed by a processor.

It should be noted that the above computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier, and computer-readable program code is carried therein. The data signal propagated in this way may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted in any suitable medium, including, but not limited to, a wire, an optical cable, a radio frequency (RF), or any suitable combination thereof.

In some implementations, a client and a server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The computer-readable medium may be contained in the electronic device, or may exist alone without being assembled into the electronic device.

The above computer-readable medium carries one or more programs that, when executed by the electronic device, cause the electronic device to: display an editing control on a playing page, where the playing page is configured to play a preset audio file; display an audio editing page in response to an interactive operation on the editing control, where the audio editing page includes audio information of the preset audio file and a generation control; determine a reference audio segment in the preset audio file in response to a selection operation on the audio information; and generate a target audio segment according to the reference audio segment and determine a target audio file according to the target audio segment in response to an interactive operation on the generation control.

The computer program code for performing the operations of the present disclosure may be written in one or more programming languages or a combination thereof. The above programming languages include, but are not limited to, an object-oriented programming language such as Java, Smalltalk, and C++, and further include conventional procedural programming languages such as "C" language or similar programming languages. The program code may be executed entirely on a user computer, partly on the user computer, as a stand-alone software package, partly on the user computer and partly on a remote computer, or entirely on the remote computer or a server. In the case involving the remote computer, the remote computer may be connected to the user computer through any kind of network, including a local area network (LAN) or a wide area network (WAN), or may be connected to an external computer (for example, connected through the Internet using an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the embodiments of the present disclosure may be implemented in a software manner, and may also be implemented in a hardware manner. The name of the unit does not constitute a limitation on the unit itself under certain circumstances.

The functions described above herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept. For example, a technical solution formed by replacing the above features with technical features with similar functions disclosed in the present disclosure (but not limited thereto) also falls within the scope of the present disclosure.

In addition, although the various operations are depicted in a particular order, this should not be understood as requiring these operations to be performed in the particular order shown or in a sequential order. Under certain circumstances, multitasking and parallel processing may be advantageous. Similarly, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the present subject matter has been described in language specific to structural features and/or logical actions of the method, it should be understood that the subject matter defined in the appended claims is not necessarily limited to the specific features or actions described above. Conversely, the specific features and actions described above are only exemplary forms for implementing the claims.

## Claims

1. An audio file generation method, comprising:
displaying an editing control on a playing page, wherein the playing page is configured to play a preset audio file;
displaying an audio editing page in response to an interactive operation on the editing control, wherein the audio editing page comprises audio information of the preset audio file and a generation control;
determining a reference audio segment in the preset audio file in response to a selection operation on the audio information; and
generating a target audio segment according to the reference audio segment and determining a target audio file according to the target audio segment in response to an interactive operation on the generation control.

2. The method of claim 1, wherein determining the reference audio segment in the preset audio file in response to the selection operation on the audio information comprises:
determining the reference audio segment in the preset audio file according to an audio position corresponding to a dragging operation on the audio information in response to the dragging operation on the audio information; and
loop-playing the reference audio segment and converting audio information corresponding to the reference audio segment into a selected state.

3. The method of claim 2, wherein the audio information is divided into at least two audio information segments based on lyrics of the preset audio file, and
determining the reference audio segment in the preset audio file according to the audio position corresponding to the dragging operation on the audio information in response to the dragging operation on the audio information comprises:
determining the reference audio segment in the preset audio file according to a selected audio information segment in response to a selection operation on an audio information segment.

4. The method of any one of claims 1-3, wherein displaying the editing control on the playing page comprises:
displaying a music cover corresponding to the preset audio file on the playing page and displaying the editing control at a corresponding position of the music cover.

5. The method of any one of claims 1-4, wherein the audio information comprises an audio bar, and displaying the audio editing page in response to the interactive operation on the editing control comprises:
displaying the audio editing page in response to a click operation on the editing control, wherein the audio editing page further comprises a lyrics panel and a text control, the lyrics panel is configured to display lyrics of the preset audio file, and the audio bar is located between the lyrics panel and the text control.

6. The method of claim 5, further comprising:
hiding the lyrics panel in the audio editing page and adjusting positions of the audio bar and the text control in response to a text input operation on the text control, and determining a target text according to the text input operation, wherein the target text comprises lyrics of the target audio segment and/or a lyrics description of the target audio segment; and
generating the target audio segment according to the reference audio segment in response to the interactive operation on the generation control comprises:
generating the target audio segment according to the reference audio segment and the target text in response to the interactive operation on the generation control.

7. The method of claim 6, wherein generating the target audio segment according to the reference audio segment and the target text comprises:
in response to the target text comprising a lyrics description of the target audio segment, generating target lyrics of the target audio segment according to the lyrics description; and
generating the target audio segment according to the target lyrics and at least one music attribute of the reference audio segment selected from the group consisting of timbre, music style, and arrangement.

8. The method of any one of claims 1-7, wherein the audio editing page further comprises a time option;
the method further comprises:
determining target time in response to a selection operation on the time option; and
generating the target audio segment according to the reference audio segment in response to the interactive operation on the generation control comprises:
generating the target audio segment according to the reference audio segment and the target time in response to the interactive operation on the generation control.

9. The method of any one of claims 1-8, wherein determining the target audio file according to the target audio segment comprises:
connecting the reference audio segment and the target audio segment to obtain the target audio file, and
playing the target audio file.

10. An electronic device, comprising:
one or more processors; and
a storage apparatus, configured to store one or more programs,
wherein the one or more programs, when executed by the one or more processors, cause the one or more processors to implement the audio file generation method of any one of claims 1-9.

11. A storage medium comprising computer-executable instructions, wherein the computer-executable instructions, when executed by a computer processor, cause the audio file generation method of any one of claims 1-9 to be implemented.
